# EUROPÄISCHE PATENTSCHRIFT

(11) **EP 0 764 804 B1**
(45) Veröffentlichungstag und Bekanntmachung des Hinweises auf die Patenterteilung: **07.04.1999**
(21) Anmeldenummer: 96115013.3
(22) Anmeldetag: 19.09.1996
(51) Int. Cl.: F16K 31/04, F16H 25/20

(54) **Spindelmutter/Gewindespindel-Anordnung**
Threaded nut-spindle arrangement
Assemblage écrou-broche filetée

(30) Priorität: 21.09.1995 DE 19535051
(43) Veröffentlichungstag der Anmeldung: 26.03.1997
(73) Patentinhaber: HONEYWELL AG, 63067 Offenbach (DE)
(72) Erfinder: Heinen, Hartwig, Ing., 63486 Bruchköbel (DE)
(74) Vertreter: Herzbach, Dieter, Dipl.-Ing.

(56) Entgegenhaltungen:
- EP-A- 0 010 113
- DE-A- 3 134 820

## Beschreibung

Die vorliegende Erfindung bezieht sich auf eine Vorrichtung zur Umsetzung der Drehbewegung einer Spindelmutter in eine kraftabhängige Linearbewegung einer Gewindespindel nach dem Gattungsbegriff des Patentanspruches 1. Eine derartige Vorrichtung findet vorzugsweise Anwendung bei einem elektromotorischen Ventilantrieb.

Ein bekannter elektromotorischer Ventilantrieb dieser Art umfaßt einen elektrischen Synchronmotor, der über ein zwischengeschaltetes Zahnradgetriebe eine Spindelmutter antreibt, in deren Innengewinde eine Gewindespindel mit einem entsprechenden Außengewinde eingreift. Die Gewindespindel ist mit einer Ventilstange gekoppelt, die den Schließkörper eines Ventils bei ihrer Verschiebung gegen einen entsprechenden Ventilsitz führt. Bei einem Dreiwege-Ventil arbeitet der Schließkörper mit zwei Ventilsitzen zusammen. Um eine vorbestimmte Schließkraft des Ventils zu erzeugen, ist die Spindelmutter in einem Lager axial verschiebbar angeordnet, und es ist jeweils eine Feder, vorzugsweise ein Tellerfedernpaket, zwischen einem ortsfesten Anschlag und einem Gegenlager an der Spindelmutter eingespannt. Beim Anschlag am jeweiligen Ventilsitz führt daher die Spindelmutter eine axiale Verschiebebewegung aus und komprimiert eine der beiden Federn bis ein Endschalter den Synchronmotor ausschaltet. Damit ist das Ventil geschlossen und der Schließkörper liegt mit einer vorbestimmten Schließkraft am Ventilsitz an.

Aus der DE 31 34 820 C2 ist ein elektromotorischer Stellgliedantrieb bekannt, bei dem allerdings die Gewindespindel durch den Synchronmotor angetrieben ist und die Spindelmutter mit der Ventilstange gekoppelt ist. Auch dort sind zwei Tellerfederpakete angeordnet, gegen die die Gewindespindel bis zur Endlagenabschaltung verschoben wird.

Der bekannten gattungsbegriffsmäßigen Ventilantrieb wird in den Figuren 1,1a näher erläutert. Aus EP-A-10 113 ist ebenfalls eine gattungsbegriffsmäßige Vorrichtung bekannt.

Als nachteilig hat sich bei dieser bekannten Konstruktion die Notwendigkeit der Anordnung zweier Federn erwiesen. Darüber hinaus ergaben sich Festigkeitsprobleme bei einer Ausführung der Spindelmutter in Kunststoff. Durch die Anordnung von Quetschringen als Gegenlager für die Tellerfedern in umlaufenden Nuten der Spindelmutter, die dauernd anstehende Vorspannkraft der Tellerfedern und die zusätzliche Krafteinleitung bei Verschiebung der Spindelmutter ergaben sich Dauer-Festigkeitsprobleme, die praktisch nur dadurch umgangen werden konnten, daß die Spindelmutter aus Bronze hergestellt wurde.

Ausgehend von diesem Stand der Technik ist es daher die Aufgabe der vorliegenden Erfindung, eine Vorrichtung der eingangs genannten Art so auszugestalten, daß sie einfacher, preisgünstiger und auch bei einer Ausführung der Spindelmutter in Kunststoff dauerfest ist.

Die Lösung dieser Aufgabe gelingt gemäß den kennzeichnenden Merkmalen des Patentanspruches 1. Weitere vorteilhafte Ausgestaltungen der erfindungsgemäßen Vorrichtung sind den abhängigen Ansprüchen entnehmbar.

Anhand der Figuren der beiliegenden Zeichnung sei im folgenden die Erfindung näher erläutert. Es zeigen:
- Figur 1: eine Schnittansicht eines bekannten elektromotorischen Ventilantriebs;
- Figur 1a: eine Einzelheit aus Figur 1 in vergrößerter Darstellung;
- Figur 2: eine Schnittansicht durch die erfindungsgemäße Vorrichtung; und
- Figur 3: eine Schnittansicht durch die erfindungsgemäße Vorrichtung entlang einer versetzten Schnittlinie.

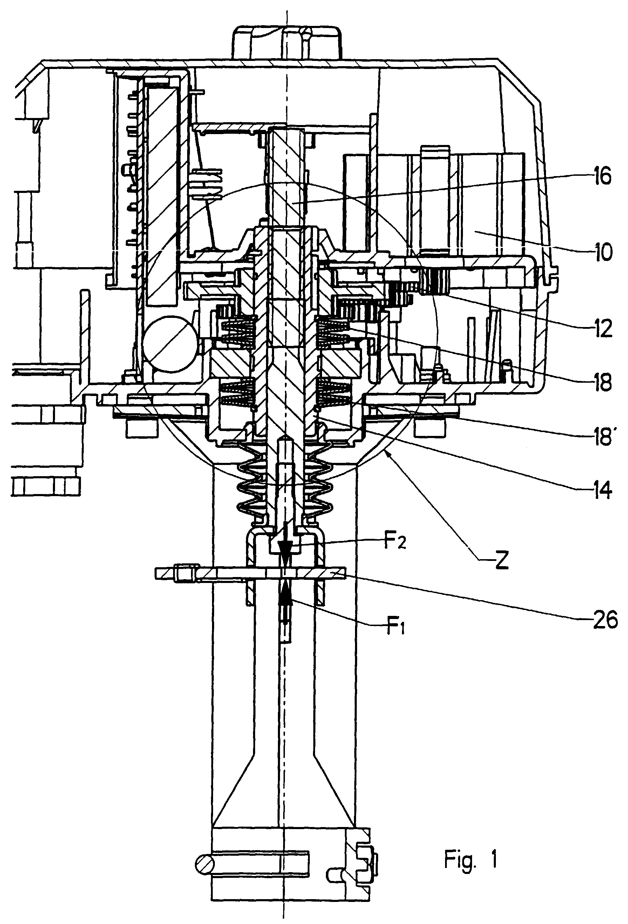

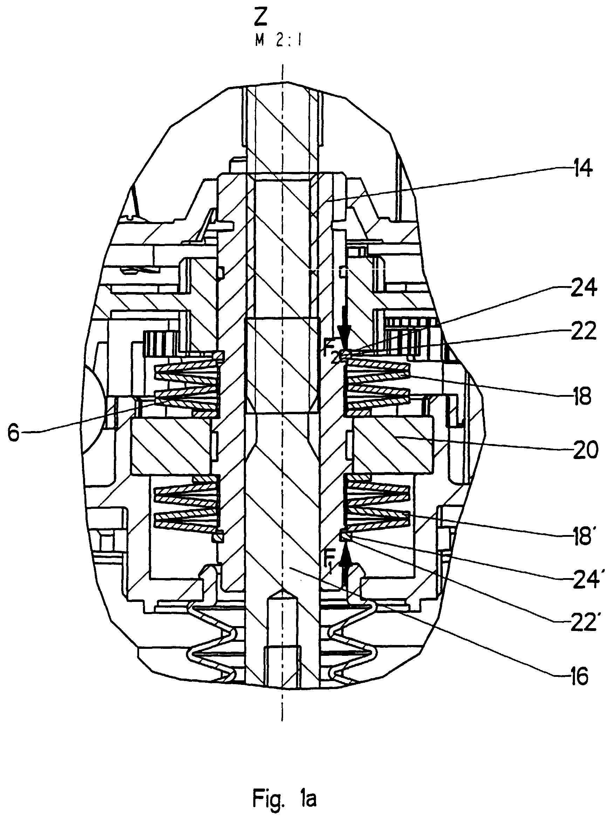

Gemäß den Figuren 1, 1a umfaßt der Ventilantrieb in bekannter Weise einen gehäusefest gelagerten Synchronmotor 10, der über ein zwischengeschaltetes Zahnradgetriebe 12 eine Spindelmutter 14 antreibt, in deren Innengewinde eine Spindel 16 mit ihrem Außengewinde eingreift, so daß sich bei einer Drehung der Spindelmutter 14 die Gewindespindel 16 in axialer Richtung verschiebt. Die Spindelmutter 14 ist in beiden Richtungen durch Tellerfederpakete 18, 18' gegen einen gehäusefesten Kugellagerring 20 vorgespannt, wobei in umlaufende Nuten 22, 22' eingelegte Quetschringe 24, 24' das bewegliche Gegenlager für die Tellerfederpakete vorgeben. Die Gewindespindel 16 ist über eine Kupplung 26 mit einer nicht-dargestellten Ventilstange kuppelbar. Wenn mit der Ventilstange ein Schließkörper verbunden ist und dieser Schließkörper an einem Ventilsitz zum Anschlag gelangt, so wird die Ventilstange und die mit ihr verbundene Gewindespindel an einer weiteren Axialbewegung gehindert, und die Spindelmutter 14 verschiebt sich dementsprechend gegen die Kraft einer der beiden Tellerfederpakete. Die Tellerfederpakete 18, 18' werden komprimiert bis ein von der Spindelmutter 14 betätigter Endschalter den Synchronmotor 10 ausschaltet.

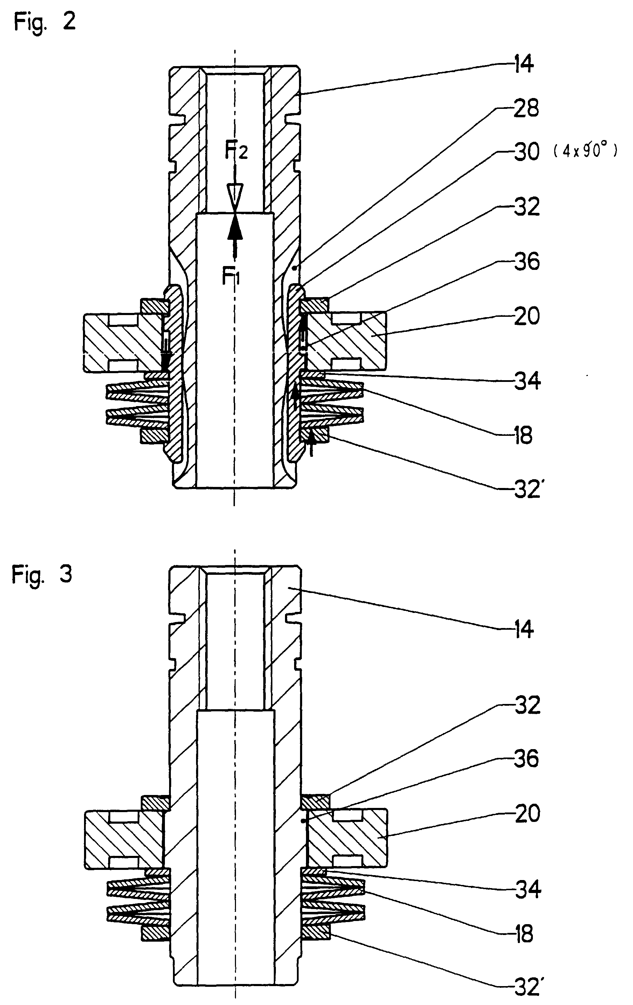

Diese bekannte Konstruktion weist die eingangs erwähnten Nachteile auf und wird durch die in den Figuren 2 und 3 dargestellte Lösung verbessert.

Gemäß Figur 2 ist die Spindelmutter 14 entlang ihres Umfanges mit achsparallelen Nuten 28 versehen, in die Spannhaken 30 eingelegt sind. Vorzugsweise sind die Nuten 28 und die Spannhaken 30 viermal um jeweils 90° versetzt über den Umfang der Spindelmutter 14 vorgesehen. Die Nuten 28 sind länger als die Spannhaken 30, und die Spannhaken 30 sind axial verschiebbar, wobei sie sich zwischen dem Nutengrund und dem ortsfesten Kugellager 20 bewegen. Die Enden der Nuten 28 sind vertieft, um eine Auslenkung der aus Federstahl bestehenden Spannhaken 30 zu ermöglichen, so daß Spannringe 32, 32' über die hakenförmigen Enden der Spannhaken 30 gezogen werden können, nachdem zuvor ein Tellerfederpaket 18 über den Spannhaken 30 geschoben worden ist. Eine Paßscheibe 34 liegt an dem ortsfesten Kugellager 20 an und dient als Gegenlager für das Tellerfederpaket 18. In den Umfangsbereichen der Spindelmutter 14, wo die Nuten 28 nicht vorhanden sind, weist die Spindelmutter 14 einen umlaufenden Bund 36 auf, der bei einer Verschiebung nach oben den Spannring 32 und bei einer Verschiebung nach unten die Paßscheibe 34 mitnimmt.

Aus dem vorstehend beschriebenen Aufbau ergibt sich folgende Funktion der erfindungsgemäßen Vorrichtung:
Bei einer Krafteinleitung gemäß dem Pfeil F₁ in Figur 2 drückt der Bund 36 der Spindelmutter 14 gegen den Spannring 32, so daß dieser Spannring die Kraft bzw. die Bewegung über die vier Spannhaken 30 auf den gegenüberliegenden Spannring 32' überträgt. Das Kugellager 20 und die Paßscheibe 34 bilden hierbei ein ortsfestes Gegenlager. Bei der Verschiebung der Spindelmutter 14 wird somit das Tellerfederpaket 18 komprimiert, bis über den nicht dargestellten Endschalter der Synchronmotor ausgeschaltet wird.

Bei einer Krafteinleitung entlang des Pfeiles F₂ überträgt der Bund 36 der Spindelmutter 14 über die Paßscheibe 34 die Kraft bzw. die Bewegung auf das Tellerfederpaket 18, wobei der Spannring 32' über den Spannhaken 30, den Spannring 32 und das ortsfeste Kugellager 20 festgehalten wird.

Diese neuartige Spannhaken-Konstruktion bietet einige Vorteile. So wird beispielsweise die Vorspannung des Tellerfederpaketes von den Spannhaken aufgenommen. Dadurch ergibt sich keine zusätzliche Dauerbelastung der Spindelmutter während des Normalbetriebes. Die umlaufenden Nuten für die Quetschringe können entfallen, so daß die entsprechenden Kerbspannungen reduziert werden. Im Gesamtbereich der Spindelmutterbewegung ergibt sich ferner keine Kraftaddierung bezüglich der eingeleiteten Kräfte F₁ bzw. F₂. Ferner vermeiden die Spannhaken eine Reibung zwischen dem Tellerfederpaket und der Spindelmutter. Alle diese Punkte resultieren darin, daß die Spindelmutter 14 problemlos in Kunststoff ausgeführt werden kann.

## Patentansprüche

1. Vorrichtung zur Umsetzung der Drehbewegung einer Spindelmutter (14) in eine kraftabhängige Linearbewegung einer Gewindespindel (16), insbesondere für einen elektromotorischen Ventilantrieb, wobei die Spindelmutter in der jeweiligen Endstellung der Gewindespindel in beiden Richtungen eine Verschiebebewegung gegen die Kraft einer Feder (18) ausführt, die jeweils zwischen einem ortsfesten und einem verschiebbaren Anschlag eingespannt ist, **gekennzeichnet durch** in achsparallelen Nuten (28) in der Spindelmutter (14) eingelegte Spannhaken (30), die eine einzige in beiden Verschieberichtungen wirksame Feder (18) übergreifen, wobei die Spannhaken (30) mit Hakenenden versehen sind, die jeweils Spannringe (32, 32') übergreifen und die Spindelmutter (14) in den Umfangsbereichen außerhalb der Nuten (28) mit einem im Durchmesser erweiterten Bund (36) versehen ist, und wobei die einzige Feder (18) zwischen einem der beiden Spannringe (32') und dem Bund (36) angeordnet ist und der andere der beiden Spannringe (32) zwischen dem Bund (36) und dem Spannhaken (30) bzw. zwischen dem Spannhaken (30) und dem ortsfesten Anschlag (20) gehalten ist.

2. Vorrichtung nach Anspruch 1, **gekennzeichnet durch** mehrere gleichmäßig über den Außenumfang der Gewindespindel (14) verteilte Nuten (28) und Spannhaken (30).

3. Vorrichtung nach Anspruch 2, **gekennzeichnet durch** die Anordnung einer Paßscheibe (34) zwischen dem Bund (36) und der einzigen Feder (18).

4. Vorrichtung nach Anspruch 1 oder einem der folgenden Ansprüche, **dadurch gekennzeichnet**, daß die Spannhaken (30) aus Federstahl bestehen und die Nuten (28) an ihren Enden vertieft sind und im mittleren Bereich als Gegenlager und Führung für die Spannhaken (30) ausgebildet sind.

5. Vorrichtung nach Anspruch 1, **dadurch gekennzeichnet**, daß der ortsfeste Anschlag durch ein gehäusefestes Kugellager (20) vorgegeben ist, in welchem die Spindelmutter (14) axial verschiebbar angeordnet ist.

6. Vorrichtung nach Anspruch 4, **dadurch gekennzeichnet**, daß die Spindelmutter (14) aus Kunststoff besteht.

7. Vorrichtung nach Anspruch 4, **dadurch gekennzeichnet**, daß die Längsausdehnung der Nuten (28) größer als die Länge der Spannhaken (30) ist.

## Claims

1. A device for converting the rotation of a spindle nut (14) into a force-related linear translation of a threaded spindle (16), in particular for an electromotive valve actuator, whereat the spindle nut in each end position of the threaded spindle in both directions is executing a displacement against the force of a spring (18,18'), which spring is biased between a stationary and a displaceable abutment, **characterized by** clamping hooks (30) inserted into paraxial grooves (26) within the spindle nut (14), which clamping hooks are overlapping a sole spring (18) being active in both displacement directions, whereat the clamping hooks (30) are provided with hook ends which are overlapping straining rings (32,32') and that the spindle nut (14) in peripheral segments outside of the grooves (28) is provided with a collar (36) of enlarged diameter, whereat the sole spring (18) is arranged between one of both straining rings (32') and the collar (36) and the other of both straining rings (32) is secured between the collar (36) and the clamping hook (30) or between the clamping hook (30) and the stationary abutment (20).

2. Device according to claim 1, **characterized by** a plurality, of grooves (28) and clamping hooks (30) being equally distributed over the perimeter of the spindle nut (14).

3. Device according to claim 2, **characterized by** the provision of a shim (34) between the collar (36) and the sole spring (18).

4. Device according to claim 1 or one of the following claims, **characterized in that** the clamping hooks (30) are made from spring steel, and the grooves (28) are deepened at their ends and within their middle range are formed as a support and guidance for the clamping hooks (30).

5. Device according to claim 1, **characterized in that** the stationary abutment is provided by means of a ball-bearing race (20) fixed to the housing. within which the spindle nut (14) is axially displaceable.

6. Device according to claim 4, **characterized in that** the spindle nut (14) is made of synthetic resin.

7. Device according to claim 4, **characterized in that** the longitudinal extension of the grooves (28) is larger than the length of the clamping hooks (30).

## Revendications

1. Dispositif pour convertir le mouvement de rotation d'un écrou-tige (14) en un mouvement linéaire, fonction de l'effort, d'une tige filetée (16), en particulier pour un actionneur de soupape à moteur électrique, l'écrou-tige exécutant, dans la position extrême respective de la tige filetée, un mouvement de coulissement dans les deux directions, à l'encontre de la force d'un ressort (18), lequel est enserré, dans chaque cas, entre une butée fixe et une butée coulissante, caractérisé par des griffes de serrage (30) qui sont insérées dans des rainures (28) parallèles à l'axe, ménagées dans l'écrou-tige (14), et qui s'engagent sur un ressort unique (18) agissant dans les deux directions de coulissement, les griffes de serrage (30) étant pourvues d'extrémités en crochet, qui s'appliquent sur des bagues de serrage respectives (32, 32'), et l'écrou-tige (14) étant pourvu, dans les régions circonférentielles et en dehors des rainures (28), d'un collet (36) plus large en diamètre, tandis que le ressort unique (18) est disposé entre l'une des deux bagues de serrage (32') et le collet (36) et que la seconde des deux bagues de serrage (32) est retenue entre le collet (36) et la griffe de serrage (30) ou entre la griffe de serrage (30) et la butée fixe (20).

2. Dispositif selon la revendication 1, caractérisé par plusieurs rainures (28) et griffes de serrage (30), uniformément réparties sur le pourtour extérieur de l'écrou-tige (14).

3. Dispositif selon la revendication 2, caractérisé par la mise en place d'une rondelle d'adaptation (34) entre le collet (36) et le ressort unique (18).

4. Dispositif selon la revendication 1 ou l'une des revendications suivantes, caractérisé en ce que les griffes de serrage (30) sont réalisées en acier à ressorts et les rainures (28) sont creusées à leurs extrémités et sont, dans la région médiane, réalisées sous la forme d'un contre-appui et d'un guide pour les griffes de serrage (30).

5. Dispositif selon la revendication 1, caractérisé en ce que la butée fixe est prédéfinie par un roulement à billes (20) solidaire du bâti, dans lequel l'écrou-tige (14) est disposé avec une liberté de coulissement axial.

6. Dispositif selon la revendication 4, caractérisé en ce que l'écrou-tige (14) est réalisé en matière plastique.

7. Dispositif selon la revendication 4, caractérisé en ce que la longueur sur laquelle s'étendent les rainures (28) est supérieure à la longueur des griffes de serrage (30).
